# EUROPÄISCHE PATENTANMELDUNG

(11) **EP 0 904 703 A2**
(43) Veröffentlichungstag der Anmeldung: **31.03.1999**
(21) Anmeldenummer: 98118447.6
(22) Anmeldetag: 30.09.1998
(51) Int. Cl.: A23P 1/08, A23L 1/064, A23L 1/0562, A23L 1/0524, A23G 3/00

(54) **Scheibenförmiger Brotbelag**

(30) Priorität: 30.09.1997 EP 97116954
(71) Anmelder: Katjes Fassin GmbH + Co. KG, 46446 Emmerich (DE)
(72) Erfinder: Fassin, Klaus, 46446 Emmerich (DE); Bachmüller, Tobias, 40629 Düsseldorf (DE)
(74) Vertreter: Albrecht, Rainer Harald, Dr.-Ing.

(57) **Zusammenfassung**

Gegenstand der Erfindung ist ein scheibenförmiger Brotbelag aus einer mit Wasser angedickten Mischung, der folgenden Zusammensetzung:
70 bis 90 Gew.-% Zucker,
1,5 bis 3,5 Gew.-% Gelatine,
0,5 bis 1,5 Gew.-% Pektin,
0,5 bis 2,5 Gew.-% Säure,
Rest Fruchtzusatz und Aromastoffe.

Gegenstand der Erfindung ist auch ein Verfahren zur Herstellung des Belags.

## Beschreibung

Die Erfindung betrifft einen scheibenförmigen Brotbelag aus einer mit Wasser angedickten Mischung, die Zucker, Fruchtzusatz, Gelatine und Pektin enthält.

Eine Brotbelagscheibe mit den eingangs beschriebenen Bestandteilen ist aus US 5 567 454 bekannt. Im Rahmen der bekannten Maßnahmen wird eine übliche Konfitürenrezeptur mit hohem Fruchtanteil mit einer Geliermittelmischung bestehend aus Gelatine, Pektin und Stärke angedickt. Die im Ausführungsbeispiel angegebene Rezeptur ergibt einen Belag mit etwa 55 Gew.-% Fruchtanteil, 25 Gew.-% Zucker, 9 Gew.-% Gelatine, 4 Gew.-% Pektin, 3,5 Gew.-% Stärke und 3,5 Gew.-% Pflanzenöl. Die Rezeptur weist einen hohen Wasseranteil auf und ist daher nur begrenzt lagerfähig. Der Gelatineanteil in der Mischung ist hoch und ergibt eine zähelastische Masse, die sich ähnlich Fruchtgummikörpern nur schlecht schneiden läßt. Die Brotbelagscheibe ist vorzugsweise taschenförmig ausgebildet und enthält in einer bevorzugten Ausführung eine Füllung aus Nuß-Butter.

Aus JP-A 61 282 044 ist ein scheibenförmiger Geleekörper bekannt, der zum Verzehr als Brotbelag bestimmt ist. Der Geleekörper beruht auf einer Konfitürenrezeptur, die mit Zucker, Wasser und Pektin unter Zugabe von Säure angedickt worden ist. Die Masse wird in einer Dicke von 2 bis 5 mm ausgerollt und geschnitten. Die Belagscheibe stellt eine plastische Masse dar, deren Oberfläche sich nicht durch Einformen von Schriftzügen oder dekorativen Mustern gestalten läßt. Die Belagscheibe mit hohem Fruchtanteil und mäßigem Zuckeranteil ist leicht verderblich und muß luftdicht gelagert werden.

Der Erfindung liegt die Aufgabe zugrunde, einen scheibenförmigen Brotbelag anzugeben, der geschmacklich einer Konfitüre nahe kommt, weniger verderblich ist, nicht klebt, aufwendige Oberflächengestaltungen ermöglicht und eine ausgezeichnete Schnittfähigkeit aufweist.

Die Aufgabe wird erfindungsgemäß gelöst durch einen scheibenförmigen Brotbelag mit folgender Zusammensetzung:
70 bis 90 Gew.-% Zucker,
1,5 bis 3,5 Gew.-% Gelatine,
0,5 bis 1,5 Gew.-% Pektin,
0,5 bis 2,5 Gew.-% Säure,
Rest Fruchtzusatz und Aromastoffe.

Der Anteil der Aromastoffe liegt üblicherweise zwischen 0,1 und 0,3 Gew.-%.

Der erfindungsgemäße scheibenförmige Brotbelag weist eine Mittelkonsistenz zwischen dem Extrem eines streichfähigen Konfitürenbelages und einem elastisch verformbaren Fruchtgummikörper auf. Der erfindungsgemäß eingestellte Fruchtgehalt liegt zwischen einer üblichen Konfitürenrezeptur mit einem Fruchtgehalt von mehr als 45 Gew.-% und Fruchtgummikörpern, die üblicherweise einen Fruchtgehalt von weniger als 1 Gew.-% aufweisen. Erfindungsgemäß wird mit einer Geliermittelmischung aus Gelatine und Pektin gearbeitet, die der Brotbelagscheibe besondere mechanische Eigenschaften gibt. Gelatine verleiht dem Endprodukt Elastizität und Festigkeit. Pektin gibt dem Produkt in Kombination mit dem erfindungsgemäß eingestellten Säureanteil einen fruchtigen Geschmack und hat die Eigenschaft, daß die erfindungsgemäße Brotbelagscheibe bei Druck elastisch bleibt, aber nicht zäh ist und bei einer Scher- und/oder Zugbeanspruchung leicht trennbar ist. Die Brotbelagscheibe läßt sich gut handhaben. Druckstellen, die beim Anfassen der Brotbelagscheibe entstehen, stellen sich aufgrund der Elastizität gegen Druckbeanspruchung zurück. Das bedeutet, daß Muster, die aus Gestaltungsgründen in die Oberfläche der Scheibe eingeformt sind, ihre Form behalten, wenn die Brotbelagscheibe aus einer Verpackung entnommen und auf eine Brotscheibe aufgelegt wird. Gleichwohl ist die Rezeptur erfindungsgemäß so eingestellt, daß die Brotbelagscheibe bei Zug- und/oder Scherbeanspruchung nur eine geringe Festigkeit aufweist und ein einfaches und bequemes Abbeißen möglich ist. Mit anderen Worten ist die Konsistenz so eingestellt, daß beim Abbeißen eines Stückes des scheibenförmigen Brotbelages eine elastische Verformung bzw. ein elastisches Verziehen der Brotbelagscheibe nicht auftritt und das Stück somit mit geringem Kraftaufwand abgebissen werden kann. Hierin unterscheidet sich der erfindungsgemäße scheibenförmige Brotbelag signifikant von einem elastisch verformbaren Fruchtgummikörper.

Als Zucker wird vorzugsweise eine Zuckermischung aus Kristallzucker und Glukosesirup verwendet. Der Anteil von Glukosesirup in der Zuckermischung beträgt zwischen 30 und 70 Gew.-%. Ein Teil des Kristallzuckers kann durch Dextrose und/oder Fructose und/oder Lactose ersetzt werden.

Der Fruchtzusatz besteht vorzugsweise aus Fruchtmark, also zerkleinerten bzw. pürierten Früchten.

Der beschriebenen Mischung aus Kristallzucker (auch Haushaltszucker genannt), Glukosesirup, Fruchtzusatz, Gelatine, Pektin, Säure und Aromastoffen können Zusatzstoffe mit ernährungsphysiologischer Wirkung als Additiv zugesetzt sein. Als Zusatzstoffe kommen beispielsweise Joghurtpulver, färbende Frucht- oder Pflanzenauszüge, Ballaststoffe und/oder pulverförmige Mineralstoffe (z. B. Calcium, Magnesium und dergleichen) in Betracht. Vorzugsweise sind pulverförmige oder körnige Nahrungsergänzungszusatzstoffe in einer unteren Schicht eingelagert, die von einer zusatzfreien, nur aus der Mischung bestehenden Schicht überzogen ist. Die zusatzfreie Schicht bildet einen gut formbaren Überzug.

Gemäß einer bevorzugten Ausführung der Erfindung sind in zumindest eine Oberfläche der Scheibe dekorative Muster eingeformt. Dekorative Muster meint Schriftzüge, bildliche Darstellungen z. B. von Früchten (zur Veranschaulichung der Geschmacksrichtung) und dergleichen.

Gegenstand der Erfindung ist ferner ein Verfahren zur Herstellung eines scheibenförmigen Brotbelages mit der vorstehend beschriebenen Zusammensetzung, bei dem
eine wäßrige Zubereitung, die aus Zucker, einem Teil des insgesamt eingesetzten Fruchtzusatzes und Pektin besteht, gekocht wird,
die gekochte Zubereitung auf 80 bis 90° C abgekühlt wird,
anschließend eine wäßrige Gelatinelösung, die Restmenge des Fruchtzusatzes, Säure und Aromastoffe zugegeben werden und
die Masse zu Brotbelagscheiben geformt und abgekühlt wird.

Vor der Formgebung können der Masse Zusatzstoffe, z. B. färbende Frucht- und Pflanzenauszüge sowie Zusatzstoffe mit ernährungsphysiologischer Wirkung, zugesetzt werden. In die wäßrige Mischung eingerührte pulverförmige, körnige und/oder stückige Zusatzstoffe schwimmen aufgrund bestehender Dichteunterschiede auf, nachdem die Mischung in Gießformen eingebracht ist. Dies kann ausgenutzt werden, um eine Brotbelagscheibe herzustellen, die eine körnige Unterschicht sowie einen im wesentlichen zusatzfreien Überzug aufweist. In den Überzug können durch entsprechende Gestaltung der Gießformen auch dekorative Muster eingeformt werden. Zur Herstellung des erfindungsgemäßen scheibenförmigen Brotbelags wird zweckmäßigerweise Bienenwachs und/oder ein Pflanzenöl als Trennmittel eingesetzt.

Im folgenden wird die Erfindung anhand einer lediglich ein Ausführungsbeispiel darstellenden Zeichnung erläutert. Es zeigen schematisch
- **Fig. 1**: ein Sandwich mit einem scheibenförmigen Brotbelag der Geschmacksrichtung "Konfitüre",
- **Fig. 2**: im Schnitt, ausschnittsweise und in einer vergrößerten Darstellung, eine weitere Ausführung des erfindungsgemäßen Brotbelages,
- **Fig. 3**: einen erfindungsgemäßen Brotbelag in einer Handelspackung.

Der scheibenförmige Brotbelag besteht aus einer mit Wasser angedickten Mischung der folgenden Zusammensetzung:
70 bis 90 Gew.-% Zucker,
1,5 bis 3,5 Gew.-% Gelatine,
0,5 bis 1,5 Gew.-% Pektin,
0,5 bis 2,5 Gew.-% Säure,
Rest Fruchtzusatz und Aromastoffe.

Der Fruchtzusatz besteht vorzugsweise aus Fruchtmark. Als Säure eigenen sich Zitronensäure und/oder andere organische Säuren (soweit zulässig). Pektin meint insbesondere hochverestertes Pektin. Bevorzugt sind natürliche und/oder naturidentische Aromastoffe, die in einer Menge von 0,1 bis 0,3 Gew.-% in der Mischung enthalten sind.

### Ausführungsbeispiel 1:

| | |
|---|---|
| Zucker | 83,8 Gewichtsanteile, |
| Frucht | 11 Gewichtsanteile, |
| Gelatine | 2,5 Gewichtsanteile, |
| Pektin | 1 Gewichtsanteil, |
| Zitronensäure | 1,5 Gewichtsanteile, |
| Aromastoffe | 0,2 Gewichtsanteile. |

Als Trennmittel wird Bienenwachs verwendet.

### Ausführungsbeispiel 2:

| | |
|---|---|
| Zuckermischung aus Kristallzucker und Glukosesirup im Mischungsverhältnis 3:2 | 70 Gewichtsanteile |
| Frucht (als Fruchtmark) | 25 Gewichtsanteile |
| Gelatine | 2,6 Gewichtsanteile |
| Zitronensäure | 1,5 Gewichtsanteile |
| Pektin | 0,8 Gewichtsanteile |
| Aromastoffe und Trennmittel | 0,2 Gewichtsanteile |
| Die Mischung hat einen Trockenstoffanteil von ca. 72 %. | |

Im Vergleich zu den vorstehenden Ausführungsbeispielen der Erfindung wird nachfolgend eine übliche Rezeptur für einen Fruchtgummikörper angegeben.

| | |
|---|---|
| Zucker und Glukosesirup | 90 Gewichtsanteile, |
| Frucht- und Pflanzenauszüge | 0,1 Gewichtsanteile, |
| Saftkonzentrate | 0,5 Gewichtsanteile, |
| Gelatine | 7 Gewichtsanteile, |
| Zitronensäure | 2,2 Gewichtsanteile |
| Aromastoffe | 0,2 Gewichtsanteile, |
| (Trennmittel | Bienenwachs). |

Der Vergleich der Rezepturen zeigt, daß für die erfindungsgemäße Brotbelagscheibe im Vergleich zu einem Fruchtgummikörper ein wesentlich geringer Gelatineanteil eingesetzt wird. Zusätzlich wird bei der erfindungsgemäßen Brotbelagscheibe Pektin als Geliermittel in Kombination mit Gelatine verwendet. Die erfindungsgemäße Geliermittelkombination ergibt eine Konsistenz des Brotbelages, der zwischen einem streichfähigen Belag und einem Fruchtgummikörper liegt. Der erfindungsgemäße Fruchtgummikörper besitzt eine geringe Elastizität. Er ist druckunempfindlich, so daß auch ein in die Oberfläche der Scheibe eingeformtes dekoratives Muster bei der Handhabung der Scheibe seine Form beibehält. Die Scherfestigkeit der erfindungsgemäß eingestellten Zusammensetzung ist gering. Die Scheibe läßt sich gut schneiden und ist auch beim Abbeißen nicht zäh.

Der erfindungsgemäße Brotbelag ermöglicht die Bildung von Sandwiches, deren Belag 1 beispielsweise wesentlich größer ist als der Träger 2, z. B. eine Brotscheibe oder eine Brötchenhälfte, in der Geschmacksrichtung Konfitüre. Der Belag 1 weist dekorative Muster 3, z. B. Früchtedarstellungen auf, die in die Oberfläche eingeformt sind, und kann, wie bei der Zubereitung von Sandwiches üblich, mit weiteren Zutaten aufwendig dekoriert werden. Die erfindungsgemäße Brotbelagscheibe ist wenig verderblich. Sie eignet sich auch zur Herstellung von Fertigsnacks.

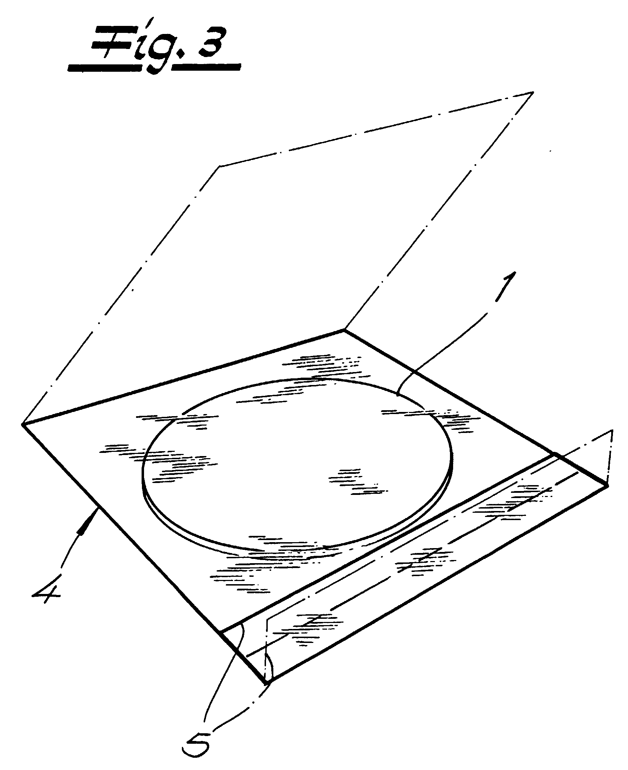

Die Scheiben können in einer Kunststoffolientasche abgepackt werden. Die Fig. 3 zeigt eine in einer transparenten Kunststoffolientasche 4 abgepackte und eingeschweißte Brotbelagscheibe 1. Die Kunststoffolientasche 4 besitzt einen Folienaufreißabschnitt 5, der auf der taschenbildenden Folie der Kunststoffolientasche aufliegt und diese überlappt. Durch Aufklappen des Folienaufreißabschnittes 5 kann die Kunststoffolientasche leicht geöffnet und die Brotbelagscheibe 1 entnommen werden.

Die erfindungsgemäße Brotbelagscheibe wird auf folgende Weise hergestellt.

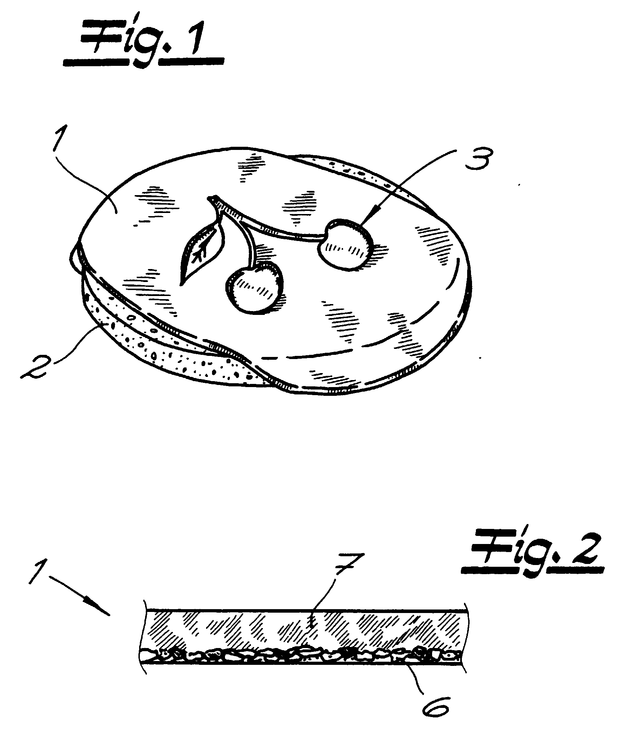

Eine wäßrige Zubereitung bestehend aus Zucker, vorzugsweise einer Zuckermischung aus Kristallzucker und Glukosesirup, einem Teil des insgesamt eingesetzten Fruchtzusatzes und Pektin wird gekocht. Die gekochte Zubereitung wird anschließend auf 80 bis 90° C abgekühlt. Danach wird eine wäßrige Gelatinelösung, der restliche Fruchtzusatz, Säure und Aromastoffe zugegeben. Die Masse wird in Gießformen eingebracht und abgekühlt. Vor der Formgebung können Zusatzstoffe, z. B. färbende Frucht- und Pflanzenauszüge und/oder Zusatzstoffe mit ernährungsphysiologischer Wirkung zugesetzt werden. Dazu gehören auch pulverförmige, körnige und/oder stückige Zusatzstoffe, z. B. Ballaststoffe und/oder pulverförmige Mineralstoffe. Durch eine geeignete Verfahrensführung bei der Formgebung kann ein Brotbelag mit der in Fig. 2 im Schnitt dargestellten Struktur hergestellt werden. Die Scheibe weist eine untere Schicht 6 auf, in der die Ballaststoffe bzw. andere pulverförmige oder körnige Zusatzstoffe eingelagert sind, und einen Überzug 7, der gut formbar ist. Der Überzug kann je nach Gießform eine glatte Oberfläche besitzen. Es können auch dekorative Muster 3 eingeformt werden, wie dies z. B. in Fig. 1 dargestellt ist.

## Patentansprüche

1. Scheibenförmiger Brotbelag aus einer mit Wasser angedickten Mischung, die Zucker, Fruchtzusatz, Gelatine und Pektin enthält, **gekennzeichnet durch**,
70 bis 90 Gew.-% Zucker,
1,5 bis 3,5 Gew.-% Gelatine,
0,5 bis 1,5 Gew.-% Pektin,
0,5 bis 2,5 Gew.-% Säure,
Rest Fruchtzusatz und Aromastoffe.

2. Scheibenförmiger Brotbelag nach Anspruch 1, dadurch gekennzeichnet, daß der Zuckeranteil aus einer Zuckermischung aus Kristallzucker und Glukosesirup besteht.

3. Scheibenförmiger Brotbelag nach Anspruch 2, dadurch gekennzeichnet, daß die Zuckermischung Dextrose und/oder Fructose und/oder Lactose enthält.

4. Scheibenförmiger Brotbelag nach einem der Ansprüche 1 bis 3, dadurch gekennzeichnet, daß der Fruchtzusatz aus Fruchtmark besteht.

5. Scheibenförmiger Brotbelag nach einem der Ansprüche 1 bis 4, dadurch gekennzeichnet, daß der Mischung Zusatzstoffe mit ernährungsphysiologischer Wirkung als Additiv zugesetzt sind.

6. Scheibenförmiger Brotbelag nach Anspruch 5, dadurch gekennzeichnet, daß die Zusatzstoffe aus Ballaststoffen und/oder Frucht- oder Pflanzenauszügen und/oder pulverförmigen Mineralstoffen bestehen.

7. Scheibenförmiger Brotbelag nach einem der Ansprüche 1 bis 6, dadurch gekennzeichnet, daß in zumindest eine Oberfläche der Scheiben dekorative Muster eingeformt sind.

8. Verfahren zur Herstellung eines scheibenförmigen Brotbelages mit einer Zusammensetzung nach einem der Ansprüche 1 bis 7, wobei
eine wäßrige Zubereitung, die aus Zucker, einem Teil des insgesamt eingesetzten Fruchtzusatzes und Pektin besteht, gekocht wird,
die gekochte Zubereitung auf 80 bis 90° C abgekühlt wird,
anschließend eine wäßrige Gelatinelösung, die Restmenge des Fruchtzusatzes, Säure und Aromastoffe zugegeben werden und
die Masse zu Brotbelagscheiben geformt und abgekühlt wird.

9. Verfahren nach Anspruch 8, dadurch gekennzeichnet, daß der Masse vor der Formgebung färbende Frucht- und Pflanzenauszüge und/oder Zusatzstoffe mit ernährungsphysiologischer Wirkung zugesetzt werden.
